# EUROPÄISCHE PATENTANMELDUNG

(11) **EP 4 631 356 A1**
(43) Veröffentlichungstag der Anmeldung: **15.10.2025**
(21) Anmeldenummer: 24168913.2
(22) Anmeldetag: 08.04.2024
(51) Int. Cl.: A23C 11/10, A23L 7/10, A23L 11/60, B04B 5/10, B04B 1/00

(54) **VORRICHTUNG UND VERFAHREN ZUM HERSTELLEN VON PFLANZLICHER MILCH**

(71) Anmelder: ANDRITZ Separation GmbH, 51149 Köln (DE)
(72) Erfinder: WÜNSCHE, Thomas, 21514 Büchen (DE)
(74) Vertreter: Viering, Jentschura & Partner mbB Patent- und Rechtsanwälte

(57) **Zusammenfassung**

Vorrichtung und Verfahren zum Herstellen von pflanzlicher Milch, mit einer Ausgangsstoff-Quelle, einer der Ausgangsstoff-Quelle nachgeschalteten Dekanter-Vorrichtung und einer der Dekanter-Vorrichtung nachgeschalteten Siebfiltrationsvorrichtung.

## Beschreibung

Die Erfindung betrifft eine Vorrichtung (z.B. eine Anlage) und ein Verfahren zum Herstellen von pflanzlicher Milch, z.B. von Milch aus Nüssen, Erbsen und/oder Getreide, z.B. von Milch aus Hafer (Hafermilch).

Bei der Herstellung von pflanzlicher Milch werden z.B. Dekanter in einem einstufigen Prozess (verwendend genau einen Dekanter) oder in einem zweistufigen Prozess (verwendend zwei Dekanter) eingesetzt.

Es ist Aufgabe der Erfindung, die Effizienz bei der Herstellung von pflanzlicher Milch zu verbessern, z.B. im Hinblick auf eine Verbesserung der Milch-Ausbeute und/oder im Hinblick auf eine Verringerung des Energiebedarfs.

Hierzu stellt die Erfindung eine Vorrichtung gemäß dem Anspruch 1 sowie ein Verfahren gemäß dem Anspruch 10 bereit. Weiterbildungen der Erfindung sind in den abhängigen Ansprüchen beschrieben.

Eine Dekanter-Vorrichtung weist prinzipiell eine Dekanterrotationstrommel/Dekantertrommel auf, welche motorgetrieben derart schnell rotiert wird, dass via radiale Fliehkräfte der in einer Ausgangsstoff-Suspension (z.B. dem in Suspension vorliegenden pflanzlichen Ausgangstoff) vorliegende Feststoff von der in der Ausgangsstoff-Suspension vorliegenden Flüssigkeit zumindest teilweise getrennt wird, wobei der Feststoff sich radial weiter außen im Inneren der Dekantertrommel ansammelt und die Flüssigkeit demgegenüber sich radial weiter innen im Inneren der Rotationstrommel ansammelt; in jedem Falle aber werden bei einer Dekanter-Vorrichtung Feststoff und Flüssigkeit nicht durch ein Sieb (z.B. ein Filtersieb) voneinander getrennt. Damit verbleibt der Feststoff im Dekanter stets mit einem erhöhten Flüssigkeitsgehalt, und beim Dekanter kann radial innen sehr Feststoff-freie Flüssigkeit, und damit z.B. schon im Wesentlichen zum Trinken geeignete pflanzliche Milch (pflanzliche Trinkmilch) gewonnen werden, welche z.B. nur noch im Hinblick auf Haltbarkeit und/oder Farbe und/oder weitere Geschmacksrichtungen und/oder Reduzierung von Zuckergehalt durch z.B. Verdünnen, etc. nachbehandelt werden muss, aber aus welcher kein weiterer Feststoff/Pulp entnommen werden muss.

Damit kann bei der Erfindung die zum Trinken vorgesehene pflanzliche Milch in einfacher Weise direkt aus der der Siebfiltrationsvorrichtung vorgeschalteten Dekanter-Vorrichtung an deren Dekanter-Flüssigkeitsausgang abgegriffen werden.

Bei einer Siebfiltrationsvorrichtung wird im Gegensatz zur Dekanter-Vorrichtung die Suspension mit Druck gegen ein Sieb (z.B. Filtersieb) geführt, wobei die Flüssigkeit durch das Sieb gelangen kann, der Feststoff aber zumindest teilweise vom Sieb zurückgehalten wird. Die Verwendung des Siebs führt dazu, dass stets etwas Feststoff mit durch das Sieb hindurch gelangt, sodass die aus der Suspension abgetrennte Flüssigkeit in der Regel weniger Feststoff-frei ist als beim Dekanter. Ferner kann einer Siebfiltrationsvorrichtung aufgrund deren Betriebsrobustheit, im Vergleich zu einer Dekanter-Vorrichtung, in der Regel eine Suspension mit höherem Feststoffgehalt zugeführt werden, ohne dass es zu Betriebsstörungen kommt.

Indem bei der Erfindung die Siebfiltrationsvorrichtung der Dekanter-Vorrichtung nachgeschaltet ist, kann ggf. der Dekanter-Feststoff unmittelbar/direkt vom Dekanter-Feststoffausgang zu dem Filtrationsvorrichtung-Eingang geleitet werden, weil der Dekanter-Feststoff noch einen für die Siebfiltrationsvorrichtung ausreichenden Flüssigkeitsgehalt haben kann. Damit kann z.B. eine Vorbehandlung des Dekanter-Feststoffs (z.B. durch weitere Zugabe von Flüssigkeit an den Dekanter-Feststoff) vor dessen Zuführung an die Siebfiltrationsvorrichtung entfallen.

Ferner können z.B. mit Siebfiltrationsvorrichtungen, im Vergleich zu Dekanter-Vorrichtungen, Ausgabe-Feststoffe (d.h. Filtrationsvorrichtungs-Feststoff) mit einem niedrigeren Flüssigkeitsgehalt erzielt werden. Dadurch kann bei der Erfindung erreicht werden, dass der Filtrationsvorrichtung-Feststoff einen erheblich höheren Feststoffgehalt (und damit niedrigeren Flüssigkeitsgehalt) hat als es z.B. mit einem der Dekanter-Vorrichtung nachgeschalteten weiteren Dekanter möglich wäre. Dadurch kann der Energiebedarf für eine ggf. weiter erforderliche Trocknung des Filtrationsvorrichtung-Feststoffs erheblich verringert werden, und die Ausbeute an pflanzlicher Milch ist erheblich erhöht, da mehr Flüssigkeit und mit dieser auch mehr Zuckeranteil wieder an die Dekanter-Vorrichtung rückgeführt wird/werden kann. Es wird bemerkt, dass die mittels der Dekanter-Vorrichtung gewonnene Dekanter-Flüssigkeit üblicherweise höheren Zuckergehalt hat als er in der Regel bei der letztlichen pflanzlichen Trinkmilch gewünscht ist; ein solch erhöhter Zuckergehalt (und damit die mit der Erfindung erzielte Erhöhung desselben (wegen erhöhter Zuckerausbeute via Rückführung von mehr Flüssigkeit, die mittels der Siebfiltrationsvorrichtung aus dem Dekanter-Feststoff gewonnen wird/gewinnbar ist)) wird durch Nachverdünnen mit Flüssigkeit (in der Regel z.B. mit Wasser) kompensiert/verringert, was zu einer weiteren Erhöhung der erlangten Trinkmilch-Menge/Trinkmilch-Ausbeute führt.

Die Vorrichtung weist z.B. die Ausgangsstoff-Quelle auf, aus welcher der in Suspension vorliegende pflanzliche Ausgangsstoff abgreifbar ist und welche mit der ersten Zuführleitung verbunden ist. Ausgangsstoffe können z.B. jegliche Art von Getreiden, wie Hafer, Gerste, Weizen, Mais, etc., Sojabohnen, Nüsse, Erbsen oder andere Pflanzenprodukte sein, die sich zur Herstellung einer Suspension eignen, sich zum Beispiel Schroten und/oder Mahlen lassen.

Die Siebfiltrationsvorrichtung kann z.B. eine Siebschneckenzentrifuge, eine Schubzentrifuge, eine Schraubenpresse oder eine Bandpresse sein. Bei der Schraubenpresse ist z.B. ein perforiertes Rohr vorgesehen, das auf der Innenseite mit einem Sieb ausgestattet ist und in welches eine drehbare Schraubenschnecke eingebracht ist. Die Schraubenschnecke kann in das Rohr eingebrachte Suspension entlang des Rohrs fördern, wobei sie eine abnehmende Steigung hat, so dass die Suspension entlang des Rohrs verdichtet und gegen das Sieb gepresst wird, sodass die Flüssigkeit der Suspension durch das Sieb und das Rohr radial nach außen gelangt und der Feststoff zumindest teilweise im Rohr verbleibt und dort via die Schraubenschnecke axial in Richtung zu einem Feststoffausgang gefördert wird. Die Schraubenpresse und die Bandpresse können aber den Nachteil haben, dass bei ihnen viel Feststoff mit durch das Sieb hindurch gelangt und dass der Energiebedarf relativ hoch ist. Auch sind Schraubenpresse und Bandpresse im Sinne der Lebensmittelhygiene schwieriger reinigungsfähig.

Eine Siebschneckenzentrifuge, wie sie z.B. auch bei der Erfindung vorgesehen sein kann, weist eine rotierbare Filtertrommel auf, die eine perforierte Trommelwand hat und die auf ihrer Innenseite mit einem Sieb (z.B. Filtersieb) versehen ist. Die Siebschneckenzentrifuge weist ferner einen in der Filtertrommel angeordneten, drehbaren Schneckenförderer, z.B. eine Förderschneckentrommel, mit einer darauf ausgebildeten Förderschnecke auf. Zwischen der Innenwandung der Filtertrommel und der Außenwandung des Schneckenförderers liegt ein Spalt vor, in welchem sich die Förderschnecke erstreckt. Die Suspension ist über eine Zentrifuge-Zuführleitung der Schneckenzentrifuge in den Spalt einbringbar, wobei die Filtertrommel derart schnell rotiert werden kann, dass die Flüssigkeit aus der Suspension radial durch das Sieb und die perforierte Trommelwand gelangen kann und von dort dann zum Filtrationsvorrichtung-Flüssigkeitsausgang gelangen kann, wohingegen ein Teil des Feststoffs im Inneren der Filtertrommel im Spalt verbleibt und via die Förderschnecke in Richtung zum Filtrationsvorrichtung-Feststoffausgang gefördert wird. Bei der Schubzentrifuge sind zwei oder mehr Filtertrommelabschnitte ineinander geschachtelt, deren Innenwandung z.B. mit einem Sieb/Filtersieb ausgestattet ist, wobei mittels einer Axialbewegung eines Filtertrommelbodens sowie des einen oder anderen Filtertrommelabschnitts relativ zueinander der an der Innenwandung der Filtertrommel anhaftende Filtrationsvorrichtung-Feststoff (Filterkuchen) in Richtung zum Filtrationsvorrichtung-Feststoffausgang transportiert/gefördert wird, während die Filtrationsvorrichtung-Flüssigkeit durch das Sieb und die Filtertrommel hindurch radial nach außen und dort in Richtung zum Filtrationsvorrichtung-Flüssigkeitsausgang gelangt.

Die Siebschneckenzentrifuge und die Schubzentrifuge können im Vergleich zur Schraubenpresse und Bandpresse den Vorteil haben, dass bei ihnen weniger Feststoff durch das Sieb mit hindurch gelangt und dass bei ihnen der Energiebedarf geringer ist. Ferner können die Siebschneckenzentrifuge und die Schubzentrifuge in der Regel einfacher und besser hygienisch gereinigt werden.

Bei der Erfindung ist z.B. die Rückführleitung stromabwärts von der Ausgangsstoff-Quelle mit der ersten Zuführleitung verbunden, optional direkt mit der ersten Zuführleitung verbunden, sodass die Filtrationsvorrichtung-Flüssigkeit in unbehandelter und/oder nicht-aufbereiteter Form der ersten Zuführleitung zuführbar ist/zugeführt wird. Die aus der Siebschneckenzentrifuge als Siebfiltrationsvorrichtung erhaltene Filtrationsvorrichtung-Flüssigkeit eignet sich diesbezüglich (d.h. bezüglich des direkten Zuführens in unbehandelter Form) im Hinblick auf ihren Flüssigkeits- und Feststoffanteil.

Im Falle dass die Vorrichtung eine Schubzentrifuge oder eine Siebschneckenzentrifuge als Siebfiltrationsvorrichtung aufweist (wie z.B. gemäß Anspruch 3, Alternative 1 bzw. Alternative 2) kann die Vorrichtung z.B. eine Waschflüssigkeitsquelle aufweisen, wobei die Schubzentrifuge oder die Siebschneckenzentrifuge eine Waschflüssigkeitszuführvorrichtung aufweisen kann, welche über eine Waschflüssigkeitszuführleitung mit der Waschflüssigquelle verbunden ist und welche mit mehreren Waschflüssigkeitsausgabeeinrichtungen, die optional als Waschflüssigkeitsausgabedüsen ausgebildet sind, bereitgestellt ist, die in Längsrichtung entlang einer drehbaren Filtertrommel der Siebschneckenzentrifuge (oder der Schubzentrifuge) angeordnet sind, um dem an der Innenseite der Filtertrommel anhaftendem Filtrationsvorrichtung-Feststoff (Filterkuchen) eine von der Waschflüssigkeitsquelle stammende Waschflüssigkeit, zuführen zu können. (Mit Längsrichtung ist hier eine Richtung entlang der Filtertrommellängsachse, d.h. entlang der Filtertrommeldrehachse, gemeint.). Die Waschflüssigkeitsausgabeeinrichtungen sind z.B. innerhalb der Filtertrommel bereitgestellt, sodass die Waschflüssigkeit entsprechend radial von innen her in Richtung zum Filterkuchen aufbringbar ist/aufgebracht wird.

Die damit ermöglichte Zuführung von Waschflüssigkeit kann die Zuckerausbeute weiter erhöhen, indem der von dem zugeführten Dekanter-Feststoff verbleibende Feststoff und damit auch die darin noch enthaltenen Zuckeranteile weiter ausgewaschen werden. Die Zuführung von Waschflüssigkeit erlaubt/ermöglicht ferner in noch besserer Weise den Dekanter-Feststoff in unbehandeltem Zustand direkt an die Siebfiltrationsvorrichtung zuzuführen, weil damit der Dekanter-Feststoff per se weiter verflüssigt wird, und durch diese Verflüssigung wird ferner auch die Betriebssicherheit der Siebfiltrationsvorrichtung erhöht.

Bei der Vorrichtung kann z.B. vorgesehen sein, dass die zweite Zuführleitung den Dekanter-Feststoffausgang direkt mit dem Filtrationsvorrichtung-Eingang verbindet, sodass der Siebfiltrationsvorrichtung im Betrieb der Dekanter-Feststoff in nicht aufbereiteter Form direkt zuführbar ist/zugeführt wird. Wie oben erläutert, sind die Siebschneckenzentrifuge und die Schubzentrifuge auch ausreichend robust, z.B. auch mit Hilfe der vorausgehend erläuterten Waschflüssigkeitszuführvorrichtung, um den Dekanter-Feststoff in unbehandelter und damit auch in nicht weitergehend vorverflüssigter Form zu verarbeiten.

Die Vorrichtung kann aber auch z.B. eine Dekanter-Feststoff-Aufbereitungsvorrichtung aufweisen, welche in der zweiten Zuführleitung angeordnet ist und welche derart eingerichtet ist, dass von ihr der Dekanter-Feststoff aufbereitet werden kann, optional aufbereitet werden kann durch Zuführung von Aufbereitungsflüssigkeit, um den Dekanter-Feststoff stärker zu verflüssigen. Indem jedoch die Siebfiltrationsvorrichtung, wie oben erläutert, robust gegenüber einem relativ trockenen Dekanter-Feststoff ist, kann der Verflüssigungsaufwand in jedem Falle gering gehalten werden.

Die Vorrichtung kann ferner z.B. eine Aufbereitungsflüssigkeits-Quelle aufweisen, welche über eine Aufbereitungsflüssigkeitszuführleitung mit der Dekanter-Feststoff-Aufbereitungsvorrichtung verbunden ist, wobei optional die Waschflüssigkeitsquelle von der Aufbereitungsflüssigkeits-Quelle (oder umgekehrt) gebildet wird, sodass der Waschflüssigkeitszuführvorrichtung über die Waschflüssigkeitszuführleitung die Aufbereitungsflüssigkeit als Waschflüssigkeit zuführbar ist.

Die Vorrichtung kann z.B. ferner aufweisen die Ausgangsstoff-Quelle, aus welcher der in Suspension vorliegende pflanzliche Ausgangsstoff abgreifbar ist und die über die erste Zuführleitung mit dem Dekanter-Eingang verbunden ist, wobei die Ausgangsstoff-Quelle aufweisen kann eine Schrot- und/oder Mahleinrichtung, von welcher pflanzliche Produkte, optional Getreideprodukte, optional Hafer, geschrotet und/oder gemahlen werden können, und eine dieser nachgeschaltete Ausgangsstoff-Aufbereitungsvorrichtung, von welcher die von der Mahleinrichtung stammenden, geschroteten und/oder gemahlenen pflanzlichen Produkte aufbereitbar sind, optional durch Zuführung von Aufbereitungsflüssigkeit und/oder Enzymen, unter Herstellung des Ausgangsstoffs. Diesbezüglich kann z.B. eine separate Aufbereitungsflüssigkeits-Quelle vorgesehen, oder die vorstehend genannte Waschflüssigkeitsquelle kann z.B. als die Aufbereitungsflüssigkeits-Quelle für die Dekanter-Feststoff-Aufbereitungsvorrichtung und/oder als die Aufbereitungsflüssigkeits-Quelle für die Ausgangsstoff-Aufbereitungsvorrichtung (oder jeweils umgekehrt) dienen/herangezogen werden.

Die Vorrichtung kann z.B. ferner eine Trocknungsvorrichtung aufweisen, welche an den Filtrationsvorrichtung-Feststoffausgang angeschlossen ist und welche eingerichtet ist, um den Filtrationsvorrichtung-Feststoff zu trocknen. Das dadurch erhaltene getrocknete Feststoffprodukt kann z.B. als Lebensmittel oder als Lebensmittelergänzungsmittel, z.B. als Eiweißlieferant verwendet werden. Im Falle von Soja und/oder Hafer als Ausgangsstoff stellt das getrocknete Feststoffprodukt z.B. Okaria dar. Jegliche für Pulver geeignete Trocknungsvorrichtungen können hierfür verwendet werden, wie z.B. ein Wirbeltrockner, ein Heiztrockner oder auch eine Bandpresse oder auch irgendeine Kombination aus diesen.

Die Vorrichtung kann ferner aufweisen eine elektronische Steuervorrichtung, mittels deren die Vorrichtung automatisch (z.B. automatisiert) steuerbar ist, und eine Mehrzahl von Sensoren zum Erfassen diverser Betriebsparameter der Vorrichtung, welche mit der Steuervorrichtung verbunden sind, um die erfassten Betriebsparameter an die Steuervorrichtung zu übermitteln, wobei die elektronische Steuervorrichtung ausgebildet und eingerichtet ist, um auf Basis der erfassten Betriebsparameter die Vorrichtung derart zu steuern, dass
- der Feststoffgehalt im Dekanter-Feststoff im Bereich des Dekanter-Feststoffausgangs maximal 30 Massen-%, optional 25-30 Massen-%, bezogen auf die Gesamtmasse des in diesem Bereich vorliegenden Dekanter-Feststoffs beträgt,
- der Feststoffgehalt im Filtrationsvorrichtung-Feststoff im Bereich des Filtrationsvorrichtung-Feststoffausgangs größer als 30 Massen-%, optional bis 40 Massen-% und ferner optional 35-40 Massen-%, bezogen auf die Gesamtmasse des in diesem Bereich vorliegenden Filtrationsvorrichtung-Feststoffs ist, und
- der Feststoffgehalt in der Filtrationsvorrichtung-Flüssigkeit im Bereich des Filtrationsvorrichtung-Flüssigkeitsausgangs größer ist als der Feststoffgehalt in der Dekanter-Flüssigkeit im Bereich des Dekanter-Flüssigkeitsausgangs.

Als solche Sensoren können z.B. jeweilige Druckmesser, Durchflussratenmesser, Temperaturmesser, Dichtemesseinrichtungen, etc., vorgesehen sein, die in/an den diversen Leitungen der Vorrichtung, wie z.B. der ersten und der zweiten Zuführleitung, vorgesehen sind. Weitere solche Sensoren können z.B. Drehzahlsensoren zum Erfassen der Drehzahlen von z.B. der Dekantertrommel der Dekanter-Vorrichtung, der Filtertrommel der als Siebfilterzentrifuge ausgebildeten Siebfiltrationsvorrichtung, des Schneckenförders der Dekantertrommel und des Schneckenförderers/der Schneckentrommel der als Siebfilterzentrifuge ausgebildeten Siebfiltrationsvorrichtung sein.

Aus den über die Sensoren ermittelten Betriebsparametern kann die elektronische Steuervorrichtung ermitteln/berechnen, welche Feststoffgehalte sich an den überwachten Positionen einstellen und in Abhängigkeit davon z.B. die jeweiligen vorausgehend genannten Drehzahlen und/oder Drehzahlen von Pumpen sowie Ventile, die in den diversen Leitungen der Vorrichtung bereitgestellt sind, steuern, um die wie oben genannten gewünschten Werte für die diversen Feststoffgehalte zu erzielen.

Die Erfindung schafft es, durch geschickte Verschaltung einer Dekanter-Vorrichtung und einer Siebfiltrationsvorrichtung die Ausbeute an pflanzlicher Milch zu erhöhen sowie den Energiebedarf zu senken; zudem haben die Erfinder erkannt, dass durch gezielte Einstellung nur weniger Prozessparameter, nämlich des Feststoffgehalts im Dekanter-Feststoff im Bereich des Dekanter-Feststoffausgangs, des Feststoffgehalts im Filtrationsvorrichtung-Feststoff im Bereich des Filtrationsvorrichtung-Feststoffausgangs und des Feststoffgehalts in der Filtrationsvorrichtung-Flüssigkeit im Bereich des Filtrationsvorrichtung-Flüssigkeitsausgangs in Bezug auf den Feststoffgehalt in der Dekanter-Flüssigkeit im Bereich des Dekanter-Flüssigkeitsausgangs, die vorteilhafte Wirkung der Erfindung erheblich optimiert werden kann.

Die Erfindung wird nachfolgend anhand von möglichen Ausführformen erläutert, welche die Erfindung jedoch nicht einschränken sollen. Ist in der Anmeldung (auch im Vorausgehenden) von einer/einem ersten, einer/einem zweiten, etc. Aspekt/Bauteil die Rede, dann soll dies keine Reihenfolge des Auftretens dieser Aspekte/Bauteile bedeuten, sondern dies soll nur der Unterscheidung der damit bezeichneten Aspekte/Bauteile dienen. D.h., ein mit erstes bezeichnetes Bauteil könnte auch als zweites Bauteil bezeichnet werden und umgekehrt.

In der Zeichnung zeigen:
Figur 1 eine schematische Darstellung einer Vorrichtung zum Herstellen von pflanzlicher Milch, wobei darin mögliche weitere Ausführungsformen in Punkt-Strich-Linie oder in Punkt-Punkt-Strich-Linie dargestellt sind, und
Figur 2 ein Blockschaubild eines erfindungsgemäßen Verfahrens zum Herstellen von pflanzlicher Milch.

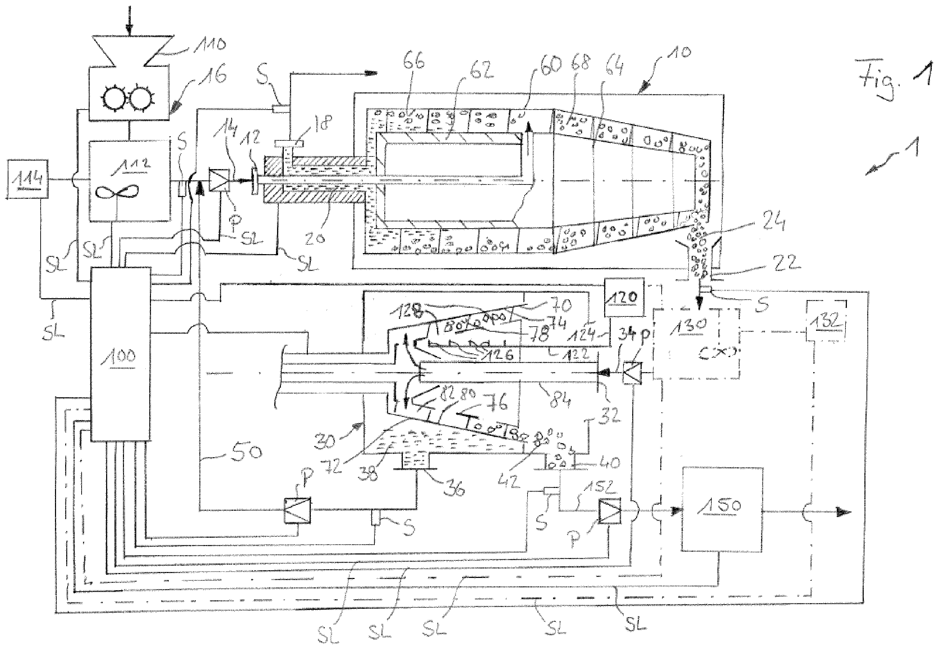

Mit Bezug auf die Figur 1 weist eine Vorrichtung 1 zum Herstellen von pflanzlicher Milch aus einem in Suspension vorliegendem pflanzlichen Ausgangsstoff gemäß einer möglichen Ausführungsform auf: eine motorgetriebene Dekanter-Vorrichtung 10, welche ihrerseits aufweist einen Dekanter-Eingang 12, der über eine erste Zuführleitung 14 mit einer Ausgangsstoff-Quelle 16 verbunden ist, sodass der Dekanter-Vorrichtung 10 der Ausgangsstoff über die erste Zuführleitung 14 zuführbar ist, einen Dekanter-Flüssigkeitsausgang 18, an welchem aus dem Ausgangsstoff mittels der Dekanter-Vorrichtung gewonnene Dekanter-Flüssigkeit 20 als pflanzliche Milch zur Weiterverarbeitung abgreifbar ist, und einen Dekanter-Feststoffausgang 22, an welchem aus dem Ausgangsstoff mittels der Dekanter-Vorrichtung gewonnener Dekanter-Feststoff 24 abgreifbar ist, eine motorgetriebene Siebfiltrationsvorrichtung 30, welche ihrerseits aufweist einen Filtrationsvorrichtung-Eingang 32, welcher über eine zweite Zuführleitung 34 mit dem Dekanter-Feststoffausgang 22 verbunden ist, sodass der Siebfiltrationsvorrichtung 30 über die zweite Zuführleitung 34 der Dekanter-Feststoff 24 zuführbar ist, einen Filtrationsvorrichtung-Flüssigkeitsausgang 36, an welchem aus dem zugeführten Dekanter-Feststoff 24 mittels der Siebfiltrationsvorrichtung 30 gewonnene Filtrationsvorrichtung-Flüssigkeit 38 abgereifbar ist, und einen Filtrationsvorrichtung-Feststoffausgang 40, an welchem aus dem zugeführten Dekanter-Feststoff 24 mittels der Siebfiltrationsvorrichtung 30 gewonnener Filtrationsvorrichtung-Feststoff 42 als Feststoffprodukt zur Weiterverarbeitung abgereifbar ist, und eine Rückführleitung 50, welche mit dem Filtrationsvorrichtung-Flüssigkeitsausgang 36 und mit der ersten Zuführleitung 14 verbunden ist, sodass die Filtrationsvorrichtung-Flüssigkeit 38 zu der ersten Zuführleitung 14 und damit zur Dekanter-Vorrichtung 10 rückführbar ist.

Die Dekantervorrichtung 10 weist auf eine drehbare Dekantertrommel 60, einen in der Dekantertrommel 60 zu dieser koaxial angeordneten, drehbaren und z.B. trommelförmigen Dekanter-Schneckenförderer 62, auf dessen Außenfläche eine Dekanter-Förderschnecke 64 ausgebildet ist. Die Dekantertrommel 60 ist zusammen mit dem Schneckenförderer 62 durch einen nicht dargestellten Motorantrieb drehantreibbar und zwar mit einer derartigen Drehzahl, dass der Dekanter-Feststoff 24 aus dem Ausgangstoff sich an der Trommel-Innenwandung 66 der Dekantertrommel 60 und damit radial weiter außen als die Dekanter-Flüssigkeit 20 anreichert/ansammelt. Damit kann die Dekanter-Flüssigkeit 20 in einem Abstand radial nach innen von der Trommel-Innenwandung 66 in sehr Feststofffreier Form abgegriffen werden. In einem Radialspalt 68 zwischen der Trommel-Innenwandung 66 und dem Dekanter-Schneckenförderer 62 wird der Dekanter-Feststoff 24 von dem Dekanter-Schneckenförderer 62, der von einem nicht dargestellten Motorantrieb relativ zu der Dekantertrommel 60 drehantreibbar ist, in Richtung zum Dekanter-Feststoffausgang 22 gefördert.

Die Siebfiltrationsvorrichtung 30 ist hier als eine Siebschneckenzentrifuge ausgebildet und weist auf: eine rotierbare Filtertrommel 70, die eine perforierte Filtertrommelwand 72 hat und die auf ihrer Innenseite 74 mit einem Sieb (z.B. Filtersieb) (nicht dargestellt) versehen ist, und einen in der Filtertrommel 70 zu dieser koaxial angeordneten, drehbaren, z.B. trommelförmigen, Filtrationsvorrichtung-Schneckenförderer 76 (z.B. eine Förderschneckentrommel) mit einer darauf ausgebildeten Filtrationsvorrichtung-Förderschnecke 78. Zwischen der Filtertrommel-Innenwandung 80 der Filtertrommel 70 und der Außenwandung des Filtrationsvorrichtung-Schneckenförderers 76 liegt ein Spalt 82 vor, in welchem sich die Filtrationsvorrichtung-Förderschnecke 78 erstreckt. Der Dekanter-Feststoff 24 ist ausgehend vom Siebfiltrationsvorrichtung-Eingang 32 über eine bezüglich der Filtertrommel 70 zentral angeordnete Zentrifuge-Zuführleitung 84 der hier als Schneckenzentrifuge ausgebildeten Siebfiltrationsvorrichtung 30 in den Spalt 82 einbringbar. Die Filtertrommel 70 ist mittels eines nicht dargestellten Motorantriebs drehantreibbar und zwar derart schnell, dass die Flüssigkeit aus dem Dekanter-Feststoff 24 als die Siebfiltrations-Flüssigkeit 38 radial durch das Sieb und die perforierte Filtertrommelwand 72 gelangen kann und von dort dann zum Filtrationsvorrichtung-Flüssigkeitsausgang 36 gelangen kann, wohingegen ein größerer Teil des im Dekanter-Feststoff 24 enthaltenen Feststoffs im Spalt verbleibt und als Filtrationsvorrichtung-Feststoff 42 via die Filtrationsvorrichtung-Förderschnecke 78 in Richtung zum Filtrationsvorrichtung-Feststoffausgang 40 förderbar ist/gefördert wird. Hierzu ist der Filtrationsvorrichtung-Schneckenförderer 76 mittels eines nicht dargestellten Motorantriebs relativ zu der Filtertrommel 70 drehantreibbar.

In den diversen Leitungen, z.B. in der ersten Zuführleitung 14, in der zweiten Zuführleitung 34, in der Rückführleitung 50, sind Pumpen P angeordnet zum Pumpenfördern der darin fließenden Stoffe/Flüssigkeiten, wie z.B. des Ausgangsstoffs, des Dekantervorrichtung-Feststoffs 24, der Dekantervorrichtung-Flüssigkeit 20, des Filtrationsvorrichtung-Feststoffs 42, der Filtrationsvorrichtung-Flüssigkeit 38. Ferner sind eine Mehrzahl von Sensoren S an diversen Position in den diversen Leitungen, z.B. in der ersten Zuführleitung 14, in der zweiten Zuführleitung 34, in der Rückführleitung 50, angeordnet zum Erfassen/Messen von Betriebsparametern, wie z.B. Drücken, Durchflussraten, Stoffdichten, etc., und sind z.B. Sensoren (nicht dargestellt) in der Dekanter-Vorrichtung 10 und in der Siebfiltrationsvorrichtung 30 zum Erfassen/Messen von deren Betriebsparametern, wie z.B. von Motorantriebsdrehzahlen, angeordnet.

Die Vorrichtung 1 weist ferner eine elektronische Steuervorrichtung 100 auf, mit welcher die Sensoren S verbunden sind und von welcher auf Basis der erfassten und an die Steuervorrichtung 100 übermittelten Betriebsparameter die Vorrichtung 1 automatisiert/automatisch steuerbar ist. Hierzu ist die Steuervorrichtung 100 über eine Mehrzahl von Steuerleitungen SL mit den diversen Komponenten der Vorrichtung 1, z.B. der Dekanter-Vorrichtung 10, der Siebfiltrationsvorrichtung 30, u.a. (siehe Figur 1), verbunden.

Die in Figur 1 dargestellte Vorrichtung 1 weist ferner auf die Ausgangsstoff-Quelle 16, aus welcher der in Suspension vorliegende pflanzliche Ausgangsstoff abgreifbar ist und die über die erste Zuführleitung 14 mit dem Dekanter-Eingang 12 verbunden ist. Die Ausgangsstoff-Quelle 16 weist z.B. auf eine Schrot- und/oder Mahlvorrichtung 110, welcher der pflanzliche Rohstoff, wie Getreide, Nüsse, (Soja)bohnen, etc. zuführbar ist und von welcher der pflanzliche Rohstoff zu Pflanzenmehl und/oder Pflanzenschrot als Ausgangsstoff verarbeitbar ist, und eine Ausgangsstoff-Aufbereitungsvorrichtung 112, von der der Ausgangsstoff aufbereitbar ist z.B. durch Verflüssigen durch Zuführen von Aufbereitungs-Flüssigkeit, die von einer (ersten) Aufbereitungs-Flüssigkeitsquelle 114 der Ausgangsstoff-Quelle 16 stammt, und durch Zuführen von Enzymen (diese können auch in der Aufbereitungs-Flüssigkeit vorliegen), welche z.B. dem Abbau von Stärke und/oder der Umwandlung von Stärke in z.B. Zucker dienen.

Die Rückführleitung 50 ist hier ausgehend vom Filtrationsvorrichtung-Flüssigkeitsausgang 36 direkt mit der ersten Zuführleitung 14 verbunden, und zwar stromabwärts von der Ausgangsstoff-Quelle 16, sodass die Filtrationsvorrichtung-Flüssigkeit 38 unbehandelt dem in Suspension vorliegenden Ausgangsstoff zugeführt wird.

Die Vorrichtung 1 weist ferner eine Waschflüssigkeitsquelle 120 auf, und die hier als Siebschneckenzentrifuge ausgebildete Siebfiltrationsvorrichtung 30 weist eine Waschflüssigkeitszuführvorrichtung 122 auf, welche über eine Waschflüssigkeitszuführleitung 124 mit der Waschflüssigkeitszuführvorrichtung 122 verbunden ist und welche mit mehreren als Düsen ausgebildeten Waschflüssigkeitsausgabeeinrichtungen 126, die in Längsrichtung entlang der drehbaren Filtertrommel 70 der Siebschneckenzentrifuge angeordnet sind, um dem an der Innenseite 74 der Filtertrommel 70 anhaftendem Filtrationsvorrichtung-Feststoff 42 (Filterkuchen) die von der Waschflüssigkeitsquelle 120 stammende Waschflüssigkeit zuzuführen/zuführen zu können. Die Waschflüssigkeitszuführvorrichtung 122 ist radial innerhalb der Filtertrommel 70 angeordnet, sodass Waschflüssigkeit von radial innen her in Richtung zum Filterkuchen zugeführt werden kann/wird bzw. auf diesen aufbringbar ist/aufgebracht wird. In der in Figur 1 gezeigten Ausführungsform erstreckt sich die Waschflüssigkeitszuführvorrichtung 122 (auch) innerhalb des hier trommelförmige ausgebildeten Filtrationsvorrichtung-Schneckenförderers 76 dessen Wandungsabschnitte zwischen der Filtrationsvorrichtung-Förderschnecke 78 mit großen Radialdurchbrüchen 128 versehen ist, so dass die Waschflüssigkeit durch die Radialdurchbrüche 128 hindurch zum Filterkuchen gelangen kann.

Die Vorrichtung 1 kann ferner z.B. aufweisen eine Dekanter-Feststoff-Aufbereitungsvorrichtung 130, welche in der zweiten Zuführleitung 34 angeordnet ist und welche derart eingerichtet ist, dass von ihr der Dekanter-Feststoff 24 aufbereitet werden kann durch Zuführung von einer Aufbereitungsflüssigkeit, die von einer (zweiten) Aufbereitungsflüssigkeits-Quelle 132 stammt, um den Dekanter-Feststoff 24 stärker zu verflüssigen.

Anstelle der (zweiten) Aufbereitungsflüssigkeit-Quelle 132 kann z.B. die Waschflüssigkeitsquelle 120 auch als (zweite) Aufbereitungsflüssigkeit-Quelle 132 dienen (siehe Punkt-Punkt-Strich-Linie zwischen 120 und 130). Die Waschflüssigkeitsquelle 120 kann z.B. auch als jeweilige (erste und zweite) Aufbereitungsflüssigkeit-Quelle 114, 132 dienen, sodass auch die (erste) Aufbereitungsflüssigkeit-Quelle 114 entfallen kann.

Die Vorrichtung 1 gemäß Figur 1 weist ferner eine Trocknungsvorrichtung 150 auf, welche über eine dritte Zuführleitung 152 mit dem Filtrationsvorrichtung-Feststoffausgang 42 verbunden ist und von welcher der Filtrationsvorrichtung-Feststoff 42 getrocknet werden kann.

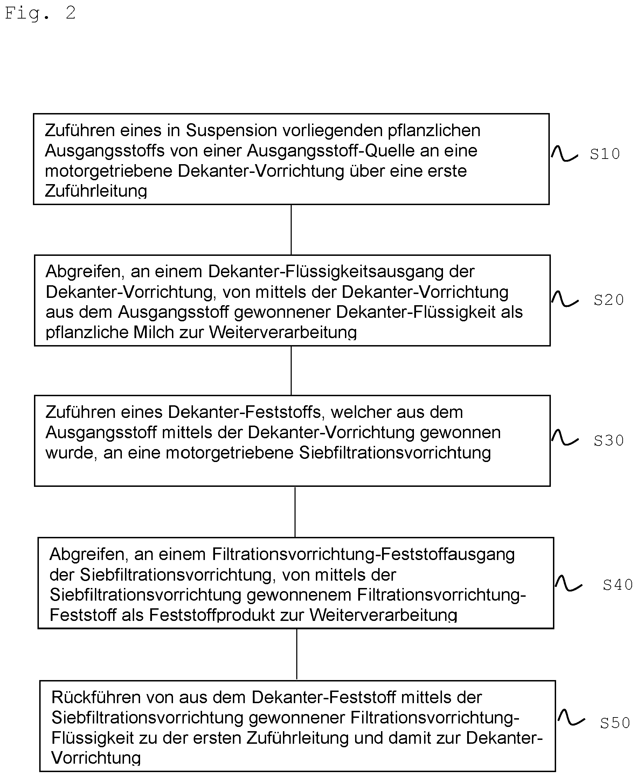

Figur 2 zeigt ein Blockschaubild eines erfindungsgemäßen Verfahrens zum Herstellen von pflanzlicher Milch, optional von Hafermilch, optional mittels einer wie in dieser Anmeldung beschriebenen Vorrichtung 1, aufweisend:
- Zuführen eines in Suspension vorliegenden pflanzlichen Ausgangsstoffs von einer Ausgangsstoff-Quelle an eine motorgetriebene Dekanter-Vorrichtung 10 über eine erste Zuführleitung 14 (S10),
- Abgreifen, an einem Dekanter-Flüssigkeitsausgang 18 der Dekanter-Vorrichtung 10, von mittels der Dekanter-Vorrichtung 10 aus dem Ausgangsstoff gewonnener Dekanter-Flüssigkeit 20 als pflanzliche Milch zur Weiterverarbeitung (S20),
- Zuführen eines Dekanter-Feststoffs 24, welcher aus dem Ausgangsstoff mittels der Dekanter-Vorrichtung 10 gewonnen wurde, an eine motorgetriebene Siebfiltrationsvorrichtung 30 (S30),
- Abgreifen, an einem Filtrationsvorrichtung-Feststoffausgang 40 der Siebfiltrationsvorrichtung 30, von mittels der Siebfiltrationsvorrichtung 30 gewonnenem Filtrationsvorrichtung-Feststoff 42 als Feststoffprodukt zur Weiterverarbeitung (S40), und
- Rückführen von aus dem Dekanter-Feststoff 24 mittels der Siebfiltrationsvorrichtung 30 gewonnener Filtrationsvorrichtung-Flüssigkeit 20 zu der ersten Zuführleitung 14 und damit zur Dekanter-Vorrichtung 10 (S50).

### Bezugszeichenliste

- 1: Vorrichtung
- 10: Dekanter-Vorrichtung
- 12: Dekanter-Eingang
- 14: erste Zuführleitung
- 16: Ausgangsstoff-Quelle
- 18: Dekanter-Flüssigkeitsausgang
- 20: Dekanter-Flüssigkeit
- 22: Dekanter-Feststoffausgang
- 24: Dekanter-Feststoff
- 30: Siebfiltrationsvorrichtung
- 32: Filtrationsvorrichtung-Eingang
- 34: zweite Zuführleitung
- 36: Filtrationsvorrichtung-Flüssigkeitsausgang
- 38: Filtrationsvorrichtung-Flüssigkeit
- 40: Filtrationsvorrichtung-Feststoffausgang
- 42: Filtrationsvorrichtung-Feststoff
- 50: Rückführleitung
- 60: Dekantertrommel
- 62: Dekanter-Schneckenförderer
- 64: Dekanter-Förderschnecke
- 66: Trommel-Innenwandung
- 68: Radialspalt
- 70: Filtertrommel
- 72: Filtertrommelwand
- 74: Innenseite
- 76: Filtrationsvorrichtung-Schneckenförderer
- 78: Filtrationsvorrichtung-Förderschnecke
- 80: Filtertrommel-Innenwandung
- 82: Spalt
- 84: Zentrifuge-Zuführleitung
- 100: elektronische Steuervorrichtung
- 110: Schrot- und/oder Mahlvorrichtung
- 112: Ausgangsstoff-Aufbereitungsvorrichtung
- 114: Aufbereitungs-Flüssigkeitsquelle
- 120: Waschflüssigkeitsquelle
- 122: Waschflüssigkeitszuführvorrichtung
- 124: Waschflüssigkeitszuführleitung
- 126: Waschflüssigkeitsausgabeeinrichtungen
- 128: Radialdurchbrüche
- 130: Dekanter-Feststoff-Aufbereitungsvorrichtung
- 132: Aufbereitungsflüssigkeits-Quelle
- 150: Trocknungsvorrichtung
- 152: dritte Zuführleitung

## Patentansprüche

1. Vorrichtung (1) zum Herstellen von pflanzlicher Milch, optional von Hafermilch, aus einem in Suspension vorliegendem pflanzlichen Ausgangsstoff, optional aus Hafersuspension, aufweisend:
- eine motorgetriebene Dekanter-Vorrichtung (10), welche aufweist
-- einen Dekanter-Eingang (12), der über eine erste Zuführleitung (14) mit einer Ausgangsstoff-Quelle (16) verbindbar ist, sodass der Dekanter-Vorrichtung (10) der Ausgangsstoff über die erste Zuführleitung (14) zuführbar ist,
-- einen Dekanter-Flüssigkeitsausgang (18), an welchem aus dem Ausgangsstoff mittels der Dekanter-Vorrichtung (10) gewonnene Dekanter-Flüssigkeit (20) als pflanzliche Milch zur Weiterverarbeitung abgreifbar ist, und
-- einen Dekanter-Feststoffausgang (22), an welchem aus dem Ausgangsstoff mittels der Dekanter-Vorrichtung (10) gewonnener Dekanter-Feststoff (24) abgreifbar ist,
- eine motorgetriebene Siebfiltrationsvorrichtung (30), welche aufweist
-- einen Filtrationsvorrichtung-Eingang (32), welcher über eine zweite Zuführleitung (34) mit dem Dekanter-Feststoffausgang (22) verbunden ist, sodass der Siebfiltrationsvorrichtung (30) über die zweite Zuführleitung (34) der Dekanter-Feststoff (24) zuführbar ist,
-- einen Filtrationsvorrichtung-Flüssigkeitsausgang (36), an welchem aus dem zugeführten Dekanter-Feststoff (24) mittels der Siebfiltrationsvorrichtung (30) gewonnene Filtrationsvorrichtung-Flüssigkeit (38) abgereifbar ist, und
-- einen Filtrationsvorrichtung-Feststoffausgang (40), an welchem aus dem zugeführten Dekanter-Feststoff (24) mittels der Siebfiltrationsvorrichtung (30) gewonnener Filtrationsvorrichtung-Feststoff (42) als Feststoffprodukt zur Weiterverarbeitung abgereifbar ist, und
- eine Rückführleitung (50), welche mit dem Filtrationsvorrichtung-Flüssigkeitsausgang (36) und mit der ersten Zuführleitung (14) verbunden ist, sodass die Filtrationsvorrichtung-Flüssigkeit (38) zu der ersten Zuführleitung (14) und damit zur Dekanter-Vorrichtung rückführbar (10) ist.

2. Vorrichtung (1) gemäß Anspruch 1, ferner aufweisend die Ausgangsstoff-Quelle (16), aus welcher der in Suspension vorliegende pflanzliche Ausgangsstoff abgreifbar ist und die über die erste Zuführleitung (14) mit dem Dekanter-Eingang (12) verbunden ist, wobei die Rückführleitung (50) stromabwärts von der Ausgangsstoff-Quelle (16) mit der ersten Zuführleitung (14) verbunden ist, optional direkt mit der ersten Zuführleitung (14) verbunden ist, sodass die Filtrationsvorrichtung-Flüssigkeit (38) in unbehandelter und/oder nicht-aufbereiteter Form der ersten Zuführleitung (14) zuführbar ist.

3. Vorrichtung (1) gemäß Anspruch 1 oder 2, wobei die Siebfiltrationsvorrichtung (30) eine Siebschneckenzentrifuge, eine Schubzentrifuge, eine Schraubenpresse oder eine Bandpresse ist.

4. Vorrichtung (1) gemäß Anspruch 3, Alternative 1 oder gemäß Anspruch 3, Alternative 2, welche ferner eine Waschflüssigkeitsquelle (120) aufweist, wobei die Siebschneckenzentrifuge oder die Schubzentrifuge eine Waschflüssigkeitszuführvorrichtung (122) aufweist, welche über eine Waschflüssigkeitszuführleitung (124) mit der Waschflüssigkeitsquelle (120) verbunden ist und welche mit mehreren Waschflüssigkeitsausgabeeinrichtungen (126), die optional als Waschflüssigkeitsausgabedüsen ausgebildet sind, bereitgestellt ist, die in Längsrichtung entlang einer drehbaren Filtertrommel (70) der Siebschneckenzentrifuge oder die Schubzentrifuge angeordnet sind, um dem an der Innenseite (74) der Filtertrommel (74) anhaftendem Filtrationsvorrichtung-Feststoff (42) eine von der Waschflüssigkeitsquelle (120) stammende Waschflüssigkeit zuführen zu können.

5. Vorrichtung (1) gemäß einem der vorigen Ansprüche, wobei die zweite Zuführleitung (34) den Dekanter-Feststoffausgang (22) direkt mit dem Filtrationsvorrichtung-Eingang (32) verbindet, sodass der Siebfiltrationsvorrichtung (30) im Betrieb der Dekanter-Feststoff (42) in nicht aufbereiteter Form direkt zuführbar ist.

6. Vorrichtung (1) gemäß einem der Ansprüche 1-4, ferner aufweisend eine Dekanter-Feststoff-Aufbereitungsvorrichtung (130), welche in der zweiten Zuführleitung (34) angeordnet ist und welche derart eingerichtet ist, dass von ihr der Dekanter-Feststoff (42) aufbereitet werden kann, optional aufbereitet werden kann durch Zuführung von Aufbereitungsflüssigkeit, um den Dekanter-Feststoff (24) stärker zu verflüssigen.

7. Vorrichtung (1) gemäß einem der vorigen Ansprüche, ferner aufweisend die Ausgangsstoff-Quelle (16), aus welcher der in Suspension vorliegende pflanzliche Ausgangsstoff abgreifbar ist und die über die erste Zuführleitung (14) mit dem Dekanter-Eingang (12) verbunden ist, wobei die Ausgangsstoff-Quelle (16) aufweist eine Schrot- und/oder Mahleinrichtung (16), von welcher pflanzliche Produkte, optional Getreideprodukte, optional Hafer, geschrotet und/oder gemahlen werden können, und eine dieser nachgeschaltete Ausgangsstoff-Aufbereitungsvorrichtung (112), von welcher die von der Schrot- und/oder Mahleinrichtung stammenden, geschroteten und/oder gemahlenen pflanzlichen Produkte aufbereitbar sind, optional durch Zuführung von Aufbereitungsflüssigkeit und/oder Enzymen, unter Herstellung des Ausgangsstoffs.

8. Vorrichtung (1) gemäß einem der vorigen Ansprüche, welche ferner aufweist eine Trocknungsvorrichtung (150), welche an den Filtrationsvorrichtung-Feststoffausgang (40) angeschlossen ist und welche eingerichtet ist, um den Filtrationsvorrichtung-Feststoff (42) zu trocknen.

9. Vorrichtung (1) gemäß einem der vorigen Ansprüche, ferner aufweisend
eine elektronische Steuervorrichtung (100), mittels deren die Vorrichtung (1) automatisch steuerbar ist, und eine Mehrzahl von Sensoren (S) zum Erfassen diverser Betriebsparameter der Vorrichtung (1), welche mit der Steuervorrichtung (100) verbunden sind, um die erfassten Betriebsparameter an die Steuervorrichtung (100) zu übermitteln, wobei die elektronische Steuervorrichtung (100) ausgebildet und eingerichtet ist, um auf Basis der erfassten Betriebsparameter die Vorrichtung (1) derart zu steuern, dass
- der Feststoffgehalt im Dekanter-Feststoff (24) im Bereich des Dekanter-Feststoffausgangs (22) maximal 30 Massen-%, optional 25-30 Massen-%, bezogen auf die Gesamtmasse des in diesem Bereich vorliegenden Dekanter-Feststoffs (24) beträgt,
- der Feststoffgehalt im Filtrationsvorrichtung-Feststoff (42) im Bereich des Filtrationsvorrichtung-Feststoffausgangs (40) größer als 30 Massen-%, optional bis 40 Massen-% und ferner optional 35-40 Massen-%, bezogen auf die Gesamtmasse des in diesem Bereich vorliegenden Filtrationsvorrichtung-Feststoffs (42) ist, und
- der Feststoffgehalt in der Filtrationsvorrichtung-Flüssigkeit (38) im Bereich des Filtrationsvorrichtung-Flüssigkeitsausgangs (36) größer ist als der Feststoffgehalt in der Dekanter-Flüssigkeit (20) im Bereich des Dekanter-Flüssigkeitsausgangs (18).

10. Verfahren zum Herstellen von pflanzlicher Milch, optional von Hafermilch, optional mittels einer Vorrichtung (1) gemäß einem der vorigen Ansprüche, aufweisend:
- Zuführen eines in Suspension vorliegenden pflanzlichen Ausgangsstoffs von einer Ausgangsstoff-Quelle (16) an eine motorgetriebene Dekanter-Vorrichtung (10) über eine erste Zuführleitung (S10),
- Abgreifen, an einem Dekanter-Flüssigkeitsausgang (18) der Dekanter-Vorrichtung (10), von mittels der Dekanter-Vorrichtung (10) aus dem Ausgangsstoff gewonnener Dekanter-Flüssigkeit (20) als pflanzliche Milch zur Weiterverarbeitung (S20),
- Zuführen eines Dekanter-Feststoffs (24), welcher aus dem Ausgangsstoff mittels der Dekanter-Vorrichtung (10) gewonnen wurde, an eine motorgetriebene Siebfiltrationsvorrichtung (30) (S30),
- Abgreifen, an einem Filtrationsvorrichtung-Feststoffausgang (40) der Siebfiltrationsvorrichtung (30), von mittels der Siebfiltrationsvorrichtung (30) gewonnenem Filtrationsvorrichtung-Feststoff (42) als Feststoffprodukt zur Weiterverarbeitung (S40), und
- Rückführen von aus dem Dekanter-Feststoff (24) mittels der Siebfiltrationsvorrichtung (30) gewonnener Filtrationsvorrichtung-Flüssigkeit (38) zu der ersten Zuführleitung (14) und damit zur Dekanter-Vorrichtung (10) (S50) .

11. Verfahren nach Anspruch 10, wobei die Filtrationsvorrichtung-Flüssigkeit (38) in unbehandelter und/oder nicht-aufbereiteter Form zur ersten Zuführleitung (14) zurückgeführt wird.

12. Verfahren gemäß Anspruch 10 oder 11, optional jeweils verwendend eine Vorrichtung (1) gemäß Anspruch 3, Alternative 1 oder Alternative 2, oder gemäß einem der Ansprüche 4-9 sofern in Kombination mit Anspruch 3, Alternative 1 oder Alternative 2, ferner aufweisend Zuführen von Waschflüssigkeit auf einen an einer Innenseite (74) einer Filtertrommel (70) einer Siebschneckenzentrifuge oder einer Schubzentrifuge, von welcher die Siebfiltrationsvorrichtung (30) gebildet wird, anhaftendem Filtrationsvorrichtung-Feststoff (42) an Positionen entlang einer Längsrichtung der Filtertrommel (70).

13. Verfahren gemäß einem der Ansprüche 10-12, ferner aufweisend
- Zuführen des Dekanter-Feststoffs (24) in nicht aufbereiteter Form direkt zu der Siebfiltrationsvorrichtung (30) oder
- Aufbereiten des Dekanter-Feststoffs durch Zuführen von Aufbereitungsflüssigkeit und Zuführen des aufbereiteten Dekanter-Feststoffs (24) zu der Siebfiltrationsvorrichtung (30) .

14. Verfahren gemäß einem der Ansprüche 10-13, ferner aufweisend
Trocknen des Filtrationsvorrichtung-Feststoffs (42) in einer Trocknungsvorrichtung (150).

15. Verfahren gemäß einem der Ansprüche 10-14, ferner aufweisend
- Einstellen, auf Basis von erfassten Betriebsparametern, des Feststoffgehalts im Dekanter-Feststoff (24) im Bereich des Dekanter-Feststoffausgangs (22) derart, dass er maximal 30 Massen-%, optional 25-30 Massen-%, bezogen auf die Gesamtmasse des in diesem Bereich vorliegenden Dekanter-Feststoffs (24) beträgt,
- Einstellen, auf Basis der erfassten Betriebsparameter, des Feststoffgehalts im Filtrationsvorrichtung-Feststoff (42) im Bereich des Filtrationsvorrichtung-Feststoffausgangs (40) derart, dass er größer als 30 Massen-%, optional bis 40 Massen-% und ferner optional 35-40 Massen-%, bezogen auf die Gesamtmasse des in diesem Bereich vorliegenden Filtrationsvorrichtung-Feststoffs (42) ist, und
- Einstellen, auf Basis der erfassten Betriebsparameter, des Feststoffgehalts in der Filtrationsvorrichtung-Flüssigkeit (38) im Bereich eines Filtrationsvorrichtung-Flüssigkeitsausgangs (36) der Siebfiltrationsvorrichtung (30) derart, dass er größer ist als der Feststoffgehalt in der Dekanter-Flüssigkeit (20) im Bereich des Dekanter-Flüssigkeitsausgangs (18).
